# EUROPEAN PATENT SPECIFICATION

(11) **EP 4 314 686 B1**
(45) Date of publication and mention of the grant of the patent: **21.08.2024**
(21) Application number: 22731706.2
(22) Date of filing: 07.06.2022
(51) Int. Cl.: F28D 7/16, F28F 1/00

(54) **HEAT EXCHANGER FOR GAS PHASE POLYMERIZATION**
WÄRMETAUSCHER FÜR GASPHASENPOLYMERISIERUNG
ÉCHANGEUR DE CHALEUR POUR POLYMÉRISATION EN PHASE GAZEUSE

(30) Priority: 08.06.2021 EP 21178380
(43) Date of publication of application: 07.02.2024
(73) Proprietor: Basell Polyolefine GmbH, 50389 Wesseling (DE)
(72) Inventor: DI FEDERICO, Pier Luigi, 44122 Ferrara (IT); RINALDI, Riccardo, 44122 Ferrara (IT); BONACCORSI, Gian Luca, 44122 Ferrara (IT); PENZO, Giuseppe, 46100 Mantova (IT); DORINI, Maurizio, 44122 Ferrara (IT)
(74) Representative: LyondellBasell
(86) International application number: PCT/EP2022/065432
(87) International publication number: WO 2022/258633

(56) References cited:
- EP-A2- 2 662 459
- WO-A1-2007/082515
- CH-A- 276 825
- DE-A1- 10 333 577
- KR-Y1- 200 406 359
- US-A1- 2014 000 850

## Description

### FIELD OF THE INVENTION

The present disclosure provides a heat exchanger which can be employed in the gas-phase polymerization of olefins. The present disclosure provides in particular a heat exchanger which comprises a bundle of tubes which have an enlarged diameter at the inlet of the tubes. The present disclosure further provides an apparatus for the gas-phase polymerization of olefins comprising the heat exchanger and a process for preparing an olefin polymer, the process being carried out in the apparatus.

### BACKGROUND OF THE INVENTION

A heat exchanger is a widely used system to transfer heat between two gases or fluids and can be used in both cooling and heating processes. A common design is a shell and tube heat exchanger which is mostly employed in oil refineries and other large chemical processes which are operated under high pressure. This type of heat exchanger consists of a shell, usually a large pressure vessel, with a bundle of tubes inside. The tubes contain a first fluid which needs to be either cooled or heated. A second fluid runs over the tubes that are being heated or cooled so that it can either provide the heat or absorb the heat as needed.

One field of application in which heat exchangers may be employed is the gas-phase polymerization of olefins. Gas-phase polymerization processes are economical processes for the production of polyolefins. Suitable reactors for carrying out such gas-phase polymerizations are, for example, fluidized-bed reactors, stirred gas-phase reactors or multizone circulating reactors with two distinct interconnected gas-phase polymerization zones. These processes are usually carried out in a gas phase comprising monomers and comonomers and often additionally also other gaseous components such as polymerization diluents, for example nitrogen or alkanes, or hydrogen as molecular weight modifier or low-molecular weight reaction products. The obtained products are generally solid polyolefin particles which are formed by polymerization catalyst systems usually comprising particulate catalyst solids.

Olefin gas-phase polymerization processes are characterized in that large amounts of gas are withdrawn from the reaction zone, passed through a heat-exchanger for removing the heat of polymerization and then returned to the polymerization zone. In fluidized-bed reactors, the returned reaction gas further serves to maintain the polyolefin particles in fluidized state. In multizone circulating reactors, the circulation between the reactor zones is effected by the returned reaction gas. To drive all these processes, the recycle lines for the reaction gas are commonly equipped with a centrifugal compressor. However, due to polymer particles and other solids being present in the reaction gas, the equipment used to carrying out the gas-phase polymerization, in particular the heat exchanger, is prone to fouling.

Fouling occurs when solid particles, such as polymer particles or other impurities, deposit on the surface of the heat exchanger, resulting in a reduction of thermal efficiency, a decrease in heat flux, an increase of temperature on the hot side and a decrease in temperature on the cold side. Such accumulation of solids may also induce under-deposit corrosion and thus reduce not only the efficiency of the process but also the life-time of the employed equipment.

Numerous efforts have been made for a long time to address the issue of fouling.

US 4,588,790 discloses a continuous gas fluidized bed process for the production of polymers wherein a gaseous stream comprising monomer is passed through a fluidized bed in a reactor zone, the polymer particles are withdrawn from the reactor zone and the stream comprising unreacted monomer and solid particles is cooled to condense a portion thereof and formed into a liquid-containing mixture wherein the weight ratio of liquid to solid particles is not less than two to one. The mixture is re-introduced into the reaction zone wherein the liquid in the mixture is vaporized. This way, formation of wet agglomerate solid particles which accumulate in regions of low velocity is avoided.

WO 00/61278 A1 provides a polymerization process and a polymerization apparatus equipped with means which are intended to limit or prevent deposition, accumulation or build-up of particles in a heat exchanger. In this regard, an apparatus for the gas-phase polymerization of olefins is described which comprises a fluidized-bed reactor fed with olefins and with a catalyst, and a recycling loop comprising at least one first pipe for conveying a recycling gas stream withdrawn at the top of the reactor, at least one heat exchanger for cooling the recycling gas stream, at least one compressor for moving the recycling gas stream and at least one second pipe for conveying the recycling gas stream in order to introduce it into the bottom part of the reactor, the heat exchanger being a multitubular exchanger which successively and jointly comprises an inlet chamber, a bundle of tubes with a horizontal longitudinal axis encased in a horizontal cylindrical shell and an outlet chamber, the outlet chamber being equipped with a discharge orifice, the wall of the outlet chamber extending along an oblique truncated cone, the larger base of which is connected to the shell and the smaller base of which corresponds to the discharge orifice connected to the second pipe, the lower generatrix of the oblique truncated cone being horizontal or with a downward inclination.

KR 200 406 359 Y1 discloses a heat exchanger for high temperature used to recycle high heat of waste gas emitted from power plants, steel mills and the like. A plurality of tubes are densely installed inside the upper and lower ends are fixed inside a soft socket.

EP 2 662 459 A2 concerns a flue gas cooler for cooling raw hot flue gas from an electric arc furnace of an iron and steel production plant. Each flue gas cooler has a gas inlet chamber, a gas outlet chamber and a matrix of gas cooling tubes extending between and into the inlet chamber and the outlet chamber. Each gas cooling tube has a bell-shaped inlet end comprising an aerodynamically curved gas-accelerating profile effective to facilitate streamlined flow of flue gas into the gas cooling tube.

WO 2007/082515 A1 relates to a tube bundle heat exchanger having tubes which are held at each side in tube plates and are connected to these in each case by means of a weld seam. The connection of the inlet side tube plate is formed in each case by means of a conical and/or trumpet-shaped transition piece, whose cross section reduces in the gas flow direction.

US 2014/0000850 A1 concerns a heat exchanger having an outer pipe section in which a plurality of inner pipe sections with channels for the fluid to be cooled are disposed. At least one cooling fluid channel is disposed in the outer pipe section. The at least one cooling fluid channel and the at least one channel for the fluid to be cooled are in heat contact and fluidically separated from each other. A plurality of inner pipe sections open on both ends form of a pipe bundle having ends fixed tightly in a corresponding lead-through opening of and upstream end body and fixed tightly with the other end in a corresponding lead through opening of a downstream end body.

CH 276 825 A deals with a heat exchanger comprising a bundle of finned tubes extending between tube plates with headers secured thereto for the passage of a heat exchange medium through the tubes.

DE 103 33 577 A1 describes an evaporating apparatus for treating viscous media and a method for evaporating volatile components from polymer solution or melts. The evaporating apparatus comprises at least one delivery chamber that is provided with a perforated bottom, a shell-and-tube heat exchanger which is connected thereto and encompasses vertical tubes and a degassing chamber located adjacent thereto.

Despite ongoing efforts to reduce fouling in gas-phase polymerization reactors, there is still the need to provide a heat exchanger for gas-phase polymerization processes which minimizes the risk of fouling by unwanted accumulation of polymer particles, in particular since the problem becomes even more acute when additional heat exchangers are installed for the purpose of increasing the heat exchange capacity and consequently the polymer production of the reactor.

### SUMMARY OF THE INVENTION

The present disclosure provides a multitubular heat exchanger for cooling a gas stream, the heat exchanger comprising an inlet chamber, a bundle of tubes encased in a shell structure and an outlet chamber, with each tube comprising an inlet, a longitudinal middle part and an outlet, wherein the diameter d1 of the inlet of each tube is larger than the diameter d2 of the corresponding longitudinal middle part of said tube. The inlets of the tubes of the heat exchanger of the present disclosure are integrated in the tube sheet separating the inlet chamber from the volume within the shell structure and the upper surface of the tube sheet between two tubes is three-dimensionally shaped so that the tube sheet forms an apex in the middle between two neighboring tubes.

In some embodiments, the ratio of the diameter d1 to the diameter d2 is from 1.75:1 to 1.5:1, more preferably from 1.4:1 to 1.3:1.

In some embodiments, the inlet of each tube has a conical shape.

In some embodiments, the diameter d1 of the inlet of each tube is 25 to 45 mm, preferably 30 to 40 mm.

In some embodiments, the diameter d2 of the longitudinal middle part of the tube is 10 to 30 mm, preferably 15 to 25 mm.

In some embodiments, the tubes are arranged in a triangular packed pattern within the shell structure.

In some embodiment, the tubes are arranged in a square packed pattern within the shell structure.

In some embodiments, the bundle of tubes comprises at least 500, preferably 500 to 6000 tubes.

In some embodiments, the distance between the middle parts of neighboring tubes is 25 to 45 mm, preferably 30 to 35 mm, measured from tube axis to tube axis.

In some embodiments, the angle between the cone area and the central axis of the tube is preferably in the range from 20° to 60°, more preferably from 30° to 50°, and in particular 45°.

In some embodiments, the tube sheet may comprise a hole for each tube, wherein the tube is partly received in the respective hole. The hole may taper out towards the upper surface forming the inlets of the tubes and forming a pointy apex between neighboring tubes.

In some embodiments, at least the part of the upper surface of the tube sheet does not comprise any flat sections between the holes extending in a plane perpendicular to an axial direction of the tube.

In some embodiments, at least the part of the upper surface of the tube sheet may be ribbed having axially protruding ribs extending between the holes, which taper towards their free end forming the apex.

In some embodiments, the apex may confine an angle of 40° to 120°, more preferably from 60° to 100°, and in particular 90°.

In some embodiments, the apex may be symmetrical forming a slope on each side extending to neighboring holes.

In some embodiments, the tubes may be welded to the tube sheet inside the respective hole, wherein a fillet weld is formed between a front face of the tube and the inner surface of the hole.

In some embodiments, the inner surface of the tubes and/or the surfaces of the inlet chamber and the outlet chamber have a surface roughness Rₐ of less than 7 µm, preferably less than 3 µm, in particular less than 2 µm, determined according to ASME B46.1.

In some embodiments, the inner surface of the tubes and/or the surfaces of the inlet chamber and the outlet chamber are made of stainless steel.

Another embodiment of the present disclosure provides an apparatus for the gas-phase polymerization of olefins, the apparatus comprising
- a reactor comprising at least one polymerization zone;
- a recycle line for withdrawing reaction gas from the reactor and feeding the reaction gas back into the reactor;
- a compressor for conveying the reaction gas along the recycle line; and
- a heat exchanger for cooling the reaction gas,
wherein the heat exchanger employed in the apparatus is the heat exchanger of the present disclosure.

In some embodiments, the heat exchanger is arranged horizontally or vertically.

In some embodiments, the reactor further comprises a butterfly valve arranged downstream of the heat exchanger.

In some embodiments, the reactor is a fluidized-bed reactor.

In some embodiments, the reactor is a multizone circulating reactor, wherein in a first polymerization zone, growing polyolefin particles flow upwards under fast fluidization or transport conditions and wherein in a second polymerization zone, growing polyolefin particles flow downward in a densified form, wherein the first polymerization zone and the second polymerization zone are interconnected and polyolefin particles leaving the first polymerization zone enter the second polymerization zone and polyolefin particles leaving the second polymerization zone enter the first polymerization zone, thus establishing a circulation of polyolefin particles through the first and second polymerization zones.

In some embodiments, the reactor is part of a series of reactors.

A further embodiment provides a process for preparing an olefin polymer comprising homopolymerizing an olefin or copolymerizing an olefin and one or more other olefins at temperatures from 20 to 200°C and pressures of 0.5 to 10 MPa in the presence of a polymerization catalyst, characterized in that the process is carried out in the reactor of the present disclosure.

In some embodiments, the process is carried out at a reaction gas stream velocity of from 5 m/s to 25 m/s, preferably from 15 m/s to 20 m/s.

### BRIEF DESCRIPTION OF THE DRAWINGS

Figure 1a shows schematically a heat exchanger of the present disclosure and Figures 1b and 1c show schematically details of a heat exchanger of the present disclosure.
Figure 2 shows schematically an apparatus comprising a fluidized bed reactor and a heat exchanger of the present disclosure for carrying out a process for preparing an olefin polymer.
Figure 3 shows schematically an apparatus comprising a multizone circulating reactor and a heat exchanger of the present disclosure for carrying out a process for preparing an olefin polymer.

### DETAILED DESCRIPTION OF THE INVENTION

The present disclosure provides a heat exchanger for cooling a gas stream wherein the heat exchanger comprises an inlet chamber, a bundle of tubes encased in a shell structure and an outlet chamber. Each tube comprises an inlet, a longitudinal middle part and an outlet. Thus, the heat exchanger of the present disclosure is a one-pass straight-tube heat exchanger. The general concept of such heat exchangers is well known to the those skilled in the art. The tubes which are passed by the gas to be cooled are fully surrounded by a circulating cooling medium. For providing mechanical stability, the tubes of the heat exchanger of the present disclosure are preferably fixedly connected to the tube sheets which separate the inlet chamber and the outlet chamber from the volume within the shell structure filled with the circulating cooling medium. Preferably, the end of the tubes are put through holes in the tubes sheets before being fixedly connected to the tube sheets.

Especially in gas-phase polymerization processes, small polymer particles or other solids may be entrained in the gas stream to be cooled which passes through the tubes of the heat exchanger. Those solid particles may accumulate in the heat exchanger, thus fouling the equipment. Therefore, the heat exchanger of the present disclosure has been designed to avoid any dead zones where solid particles may accumulate, polymerize, grow and end up plugging the heat exchanger.

In order to avoid dead zones, the diameter d1 of the inlet of each tube is larger than the diameter d2 of the corresponding longitudinal middle part of said tube. This way, any solid particles entrained in the gas stream are easily swept into the pipes and carried back into the reactor for further polymerization and growth. In preferred embodiments of the present disclosure, the ratio of the dimeter d1 to the diameter d2 is in the ratio from 1.75:1 to 1.5:1, more preferably from 1.4:1 to 1.3:1. In further preferred embodiments, the inlet of each tube has a conical shape, wherein the angle between the cone area and the central axis of the tube is preferably in the range from 20° to 60°, more preferably from 30° to 50°, and in particular 45°. The conical shape of the inlet part of the tube may be manufactured with the help of a grinding tool, preferably a rotating grinding tool having a conical shape. For manufacturing the tubes having the preferred conically shaped inlets, the cone angel of the rotating grinding tool is preferably in the range from 40° to 120°, more preferably from 60° to 100°, and in particular 90°. The slope of the inlet of the tubes is in particular designed so that solid particles cannot stop on its surface but are swept into the tube.

In further preferred embodiments, the inlet of each tube has a diameter d1 of from 25 mm to 45 mm, more preferably from 30 mm to 40 mm. Diameter within the course of the present disclosure is the inner diameter and is defined for the inlets of the tubes as any straight line segment that passes through the center of the circle defined by the periphery of the tube inlet at its broadest expansion and whose end points lay in said circle. Preferably, the diameter d2 of the longitudinal middle part of each tube, i.e. the inner diameter of the longitudinal middle part of each tube, is from 10 mm to 30 mm, more preferably from 15 to 25 mm, with the diameter as defined above and determined at the broadest expanse of the middle part of the tube. Preferably, the longitudinal middle part of the tubes has a constant diameter.

The tubes of the heat exchanger of the present disclosure are arranged in the form of a bundle encased in a shell structure. The tubes may be arranged within said bundle in a way to provide for efficient utilization of space while at the same time providing sufficient room for the cooling medium to pass around the tubes. In preferred embodiments, the tubes are arranged in a regular manner, more preferably in a square packed pattern or a triangular packed pattern. In particular preferred embodiments, the tubes are arranged within the shell structure in a triangular packed pattern. This way, the available space within the shell of the heat-exchanger can be utilized in an optimum manner, providing nonetheless for a highly efficient cooling effect. In preferred embodiment of the present disclosure, the bundle of tubes encased in the shell structure comprises at least 500 tubes and more preferably from 500 to 6000 tubes.

To allow an efficient heat transfer between the gas stream to be cooled and the cooling medium, the cooling medium needs to be able to easily flow around the tubes passed by the gas stream but the total size of the heat exchanger should not be too large to reduce construction costs. Within the course of the present disclosure, it has been found that efficient heat transfer can be achieved if the distance between the outsides of the tubes defining the space occupied by the cooling medium is not below 5 mm. In preferred embodiments, the distance between the middle parts of neighboring tubes is therefore from 25 to 45 mm and preferably from 30 to 35 mm, measured from tube axis to tube axis, respectively, with the axis passing through the center of the tubes along the longitudinal direction of the tube.

The inlets of the tubes of the heat exchanger of the present disclosure are integrated in the tube sheet separating the inlet chamber from the volume within the shell structure. Preferably, the inlets of the tubes have a conical form and have been formed by partly removing tube sheet material so that the upper surface of the tube sheet between two tubes is three-dimensionally shaped. The tube sheet forms an apex in the middle between two neighboring tubes. An accordingly formed tube sheets allows that any solids present in the gas stream are directed into the tubes and avoids accumulation of polymer particles on the tube sheet.

Within the scope of the present disclosure "the upper surface" of the tube sheet represents the surface of the tube sheet facing upstream. Consequently, the upper surface of the tube sheet faces away from the volume within the shell structure and is exposed to the gas stream and in particular the solids in the gas stream.

The tube sheet may comprise holes for each tube, wherein the tube is partly received in the respective hole and wherein the hole tapers out towards the upper surface forming the inlets of the tubes and forming a pointy apex between neighboring tubes. The apex may be symmetrical confining an angle of from 40° to 120°, more preferably from 60° to 100°, and in particular 90°. Each side of the apex may thus form a slope extending into the hole and leading towards the respective tube received in the hole. Thus, the inlets may be formed by sloped surface of the hole.

The hole may taper out towards the upper surface starting from a height beyond a front end of the tube received in the hole.

The tubes may be partly received in the respective holes, wherein the tubes do not extend through the entirety of the hole. A gap may be provided between the upper surface of the tube sheet and the front end of the tube. In order to fix the tube inside the hole, the tube may be welded to the tube sheet. In one embodiment, a fillet weld seam may be formed between the front end of the tube and an inner surface of the hole. The fillet weld seam may form a sloped surface along which particles glide into the tube. In one embodiment, the fillet weld seam may form a continuation of the slope leading to the apex formed in the tube sheet.

Optionally, at least the part of the upper surface of the tube sheet, which comes into contact with the gas flow, does not comprise any flat sections extending in a plane perpendicular to an axial direction of the tube.

Due to the apex formed on the upper surface between two neighboring tubes, solid particles slide of the sloped surfaces forming the apex and are guided into the tubes of the heat exchanger. Accumulation of the solid particles on the upper surface is thus prevented. Hence, the heat exchanger may be deployed in gas-phase polymerization apparatuses with a high reliability even without installing a gas/solid separation device such as a cyclone. A gas/solid separation device may lead to a loss of material as the solid particles, such as catalyst, will be removed from the apparatus. Furthermore, such apparatuses comprising a gas/solid separation device are not suitable for polymerizing polymer particles having a small size, as they may be entrained from the reactor and removed from the apparatus by the gas/solid separation device. Hence, by providing the heat exchanger of the present disclosure broadens the flexibility of operating the apparatus. Thus, circulation of the small particles through the recycle line is allowed lightening the requirement to mitigate the entrainment of small particles into the recycle line. In some embodiments, the recycle line is not equipped with a cyclone. In particular, the recycle line can be not equipped with a cyclone upstream of the compressor and/or heat-exchanger.

Within the course of the present disclosure it was further found that the flow of the gas stream can be further improved by providing a certain finishing of those parts of the tubes coming into contact with the gas stream. In preferred embodiments, the inner surface of the tubes and/or the surface of the connecting means have a surface roughness Rₐ of less than 7 µm, preferably less than 3 µm, in particular less than 2 µm, determined according to ASME B46.1. This way, accumulation of any solid particles present in the gas stream on the inner surface of the tubes or on the connecting means can be reduced, allowing a constant and homogenous gas flow through the heat exchanger. A suitable material which allows for the achievement of the specific surface roughness was found to be stainless steel which additionally provides an inert material able to withstand the reaction conditions of gas-phase polymerization. Therefore, in preferred embodiments, the inner surface of the tubes and/or the surface of the connecting means is made of stainless steel. A particular preferred material in this regard is AISI 304 Stainless Steel.

In preferred embodiments of the preset disclosure, the heat exchanger does not have any protrusions on the surfaces coming into contact with the reaction gas, for example originating from welding together elements of the heat exchanger, which exceed a height of 1.5 mm.

The heat exchanger of the present disclosure may be employed in a number of applications but is in particular designed for employment in olefin gas-phase polymerization processes. Therefore, in other embodiments, the present disclosure provides an apparatus for the gas-phase polymerization of olefins under employment of the heat exchanger of the present disclosure. The apparatus preferably comprises a reactor comprising at least one polymerization zone, recycle line for withdrawing reaction gas from the reactor and feeding the reaction gas back into the reactor, compressor for conveying the reaction gas along the recycle line, and a heat exchanger for cooling the reaction gas.

The heat exchanger can be arranged at various positions of the recycle line. The heat exchanger may be arranged horizontally or vertically. In preferred embodiments, the heat exchanger is arranged vertically.

In preferred embodiments, the reactor of the present disclosure further comprises a butterfly valve arranged downstream of the heat exchanger. The butterfly valve may be utilized as a further instrument for controlling the flow rate of the gas stream which allows to establish a variable pressure drop in the recycle line while the device itself has a low risk for fouling in line with the spirit of the present disclosure.

In order to minimize the presence of solid particles in the reaction gas stream, the recycling loop may further be equipped with a cyclone upstream of the compressor and the heat exchanger to minimize any carry-over of solid particles.

In preferred embodiments, the reactor of the present disclosure is a fluidized-bed reactor. Fluidized-bed reactors are reactors in which the polymerization takes place in a bed of polyolefin particles which is maintained in a fluidized state by feeding a reaction gas mixture into a reactor at the lower end of the reactor, usually below a gas distribution grid having the function of dispensing the gas flow, and withdrawing the gas again at the top of the fluidized-bed reactor. The reaction gas mixture is then returned to the lower end of the reactor via a recycle line equipped with a compressor and a heat exchanger for removing the heat of polymerization. The flow rate of the reaction gas mixture has to be sufficiently high firstly to fluidize the bed of finely divided polymer particles present in the polymerization zone and secondly to remove the heat of polymerization effectively. Suitable reactors are, for example, described in WO 2007/071527 A1.

In further preferred embodiments, the reactor of the present disclosure is a multizone circulating reactor wherein, in a first polymerization zone, growing polyolefin particles flow upward under fast fluidization or transport conditions and, in a second polymerization zone, growing polyolefin particles flow downward in a densified for, wherein the first polymerization zone and the second polymerization zone are interconnected and polyolefin particles leaving the first polymerization zone enter the second polymerization zone and polyolefin particles leaving the second polymerization zone enter the first polymerization zone, thus establishing a circulation of polyolefin particles through the first and second polymerization zone. Conducting the polymerization in a reactor as described was found to allow good control of polymer properties, in particular molecular weight distribution.

. Multizone circulating reactors are, for example, described in WO 97/04015 A1 and WO 00/02929 A1 and have two interconnected polymerization zones, a riser, in which the growing polyolefin particles flow upward under fast fluidization or transport conditions and a downcomer, in which the growing polyolefin particles flow downward in a densified form under the action of gravity. The polyolefin particles leaving the riser enter the downcomer and the polyolefin particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is equipped with a centrifugal compressor and a heat exchanger for removing the heat of polymerization. Preferably, a line for feeding catalyst or a line for feeding polyolefin particles coming from an upstream reactor is arranged at the riser and a polymer discharge system is located in the bottom portion of the downcomer. The introduction of make-up monomers, comonomers, hydrogen and/or inert components may occur at various points along the riser and the downcomer.

In particular preferred embodiments, the reactor of the present disclosure is part of a series of reactors. Preferably, the series comprises a first gas-phase apparatus and a subsequent second gas-phase apparatus.

Other embodiments of the present disclosure provides a process for preparing an olefin polymer comprising homopolymerizing an olefin or copolymerizing an olefin and one or more other olefins at temperatures from 20 to 200°C and pressures from 0.5 to 10 MPa in the presence of a polymerization catalyst, the process being carried out in the apparatus of the present disclosure.

The process of the present disclosure is especially suitable for the polymerization of olefins, especially 1-olefins, i.e. hydrocarbons having terminal double bonds, without being restricted thereto. Preference is given to nonpolar olefinic compounds. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracy-clododecene or methylnorbornene or dienes such as 5-ethylidene-2-norbornene, norbornadiene or ethylnorbornadiene.

The apparatuses are in particular suitable for the homopolymerization or copolymerization of ethylene or propylene and especially preferred for the homopolymerization or copolymerization of ethylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to polymerizations in which ethylene is copolymerized with from 0.1 wt.% to 12 wt.% of 1-hexene and/or 1-butene.

The process of the present disclosure may be carried out at pressures of from 0.5 MPa to 10 MPa, preferably from 1.0 MPa to 8 MPa and in particular from 1.5 MPa to 4 MPa, wherein these pressures, as all pressures given in the present disclosure, have to be understood as being absolute pressures, i.e. pressure having the dimension MPa (abs). The polymerization is preferably carried out at temperatures of from 30°C to 160°C, particularly preferably from 65°C to 125°C, with temperatures in the upper part of this range being preferred for preparing ethylene copolymers of relatively high density and temperatures in the lower part of this range being preferred for preparing ethylene copolymers of lower density.

The process may also be carried out in a condensing or super-condensing mode, in which part of the circulating reaction gas mixture is cooled to below the dew point and returned to the reactor either separately as a liquid and a gas-phase or together as a two-phase mixture in order to make additional use of the enthalpy of vaporization for cooling the reaction gas. When operating in a condensing or super-condensing mode, the process of the present disclosure is preferably carried out in a fluidized-bed reactor.

In preferred embodiments of the present disclosure, the polymerization is carried out in the presence of an inert gas such as nitrogen or an alkane having from 1 to 10 carbon atoms such as methane, ethane, propane, n-butane, isobutane, n-pentane, isopentane or n-hexane or mixtures thereof. The use of nitrogen or propane as inert gas, if appropriate in combination with further alkanes, is preferred. In especially preferred embodiments of the present disclosure, the polymerization is carried out in the presence of a C₃-C₅ alkane as polymerization diluent and most preferably in the presence of propane, especially in the case of homo polymerization or copolymerization of ethylene. The reaction gas mixtures within the reactor then additionally comprise the olefins to be polymerized, i.e. a main monomer and one or more optional comonomers. In preferred embodiments of the present disclosure, the reaction gas mixture has a content of inert components from 30 to 99 vol.%, more preferably from 40 to 95 vol.%, and especially from 45 to 85 vol.%. In other preferred embodiments of the present disclosure, especially if the main monomer is propylene, no or only minor amounts of inert diluent are added. The reaction gas mixture may further comprise additional components such as antistatic agents or molecular weight regulators like hydrogen. The components of the reaction gas mixture may be fed into the gas-phase polymerization reactor or into the recycle line in gaseous form or as liquid which then vaporizes within the reactor or the recycle line.

The polymerization of olefins can be carried out using all customary olefin polymerization catalysts. That means the polymerization can be carried out using Phillips catalysts based on chromium oxide, using Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

Preferred catalysts are also Phillips-type chromium catalyst, which are preferably prepared by applying a chromium compound to an inorganic support and subsequently activating the obtained catalyst precursor at temperatures in the range from 350 to 1000°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during activation. As supports for Phillips-type catalysts, which are also known to those skilled in the art, mention may be made of aluminum oxide, silicon dioxide (silica gel), titanium dioxide, zirconium dioxide or their mixed oxides or cogels, or aluminum phosphate. Further suitable support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. The activated chromium catalysts can subsequently be prepolymerized or prereduced. The prereduction is usually carried out by means of cobalt or else by means of hydrogen at 250°C to 500°C, preferably at 300°C to 400°C, in an activator.

In a further preferred embodiment of the present disclosure, the polymerization is a polymerization in a gas-phase reactor which a part of a cascade of polymerization reactors, wherein also one or more polymerizations in other gas-phase reactors of the cascade of polymerization reactors may be polymerizations according to the present disclosure. Suitable combinations of such polymerizations reactors include a fluidized-bed reactor followed by a multizone circulating reactor, a multizone circulating reactor followed by a fluidized-bed reactor, a cascade of two or three fluidized-bed reactors, and one or two loop reactors followed by one or two fluidized-bed reactors.

In order to further minimize accumulation of solid particles in the reactor while at the same time achieving a high reaction turnover, the velocity of the reaction gas stream in the process of the present disclosure may be adapted. In preferred embodiments, the process is carried out at a reaction gas stream velocity of from 5 m/s to 25 m/s, more preferably from 15 m/s to 20 m/s.

In further preferred embodiments, the fluidization velocity in the polymerization zone is 0.3 to 1.5 m/s, preferably 0.5 to 1.2 m/s.

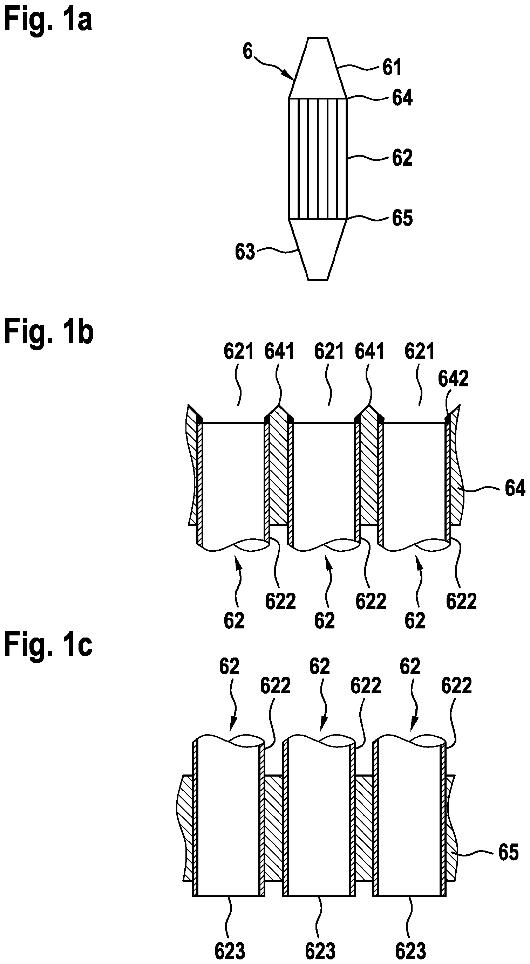

Figure 1a shows schematically a heat exchanger of the present disclosure.

Heat exchanger (6) shown in Figure 1a has an inlet chamber (61), a bundle of tubes (62) encased in a shell structure and an outlet chamber (63). The inlet chamber (61) and the outlet chamber (63) are separated from the shell structure filled with cooling medium by tube sheets (64) and (65).

Figures 1b and 1c show schematically details of a heat exchanger of the present disclosure.

Figure 1b shows schematically a cross section through the inlets of three tubes (62) of the heat exchanger (6). Shown are the conical inlets (621) of the tubes (62) and upper regions of the longitudinal middled parts (622) of the tubes (62). The tubes (62) are fastened within the heat exchanger (6) by being fixedly connected to tube sheet (64) at the upper ends of the tubes (62). The conical inlets (621) of the tubes (62) have been formed by partly removing tube sheet material so that the upper surface of tube sheet (64) between two tubes (62) is three-dimensionally shaped and forms an apex (641) in the middle between two neighboring tubes (62) . As can be seen in Figure 1b, the ends of the tubes (62) may be welded to the tubes (62) forming a fillet shaped weld seam (642). In particular, the fillet weld may extend from a front end of the tubes (62) to an inner surface of the respective holes formed on the tube sheet. The fillet weld seam (642) may form a continuation of the slope leading to the apex (641). Thus, accumulation of solid particles on the front end of the tubes may be prevented.

Figure 1c shows schematically a cross section through the outlets of three tubes (62) of the heat exchanger (6). Shown are the even outlets (623) of the tubes (62) and lower regions of the longitudinal middled parts (622) of the tubes (62). The tubes (62) are fastened within the heat exchanger (6) by being fixedly connected to tube sheet (65) at the lower ends of the tubes (62). The outlets (623) of the tubes (62) are arrange slightly below the lower surface of tube sheet (65).

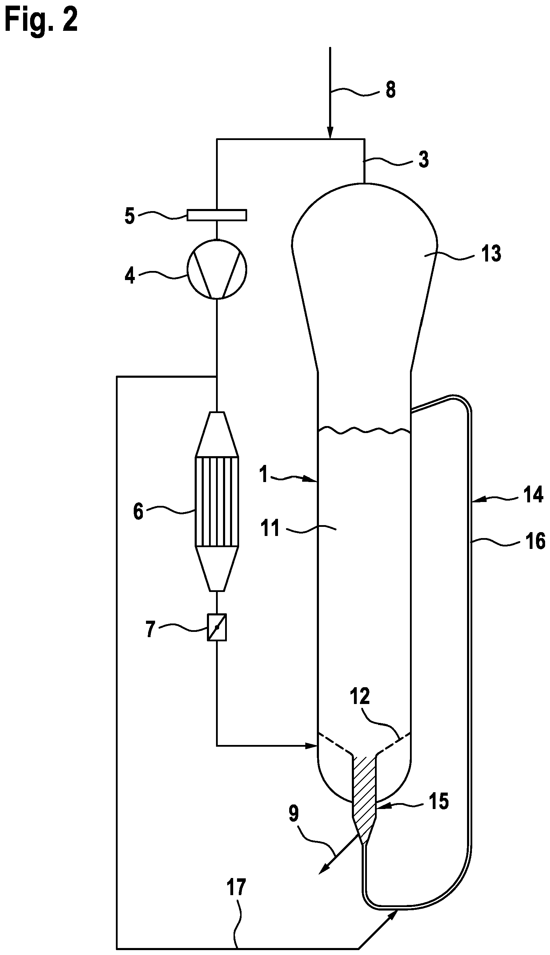

Figure 2 shows schematically an apparatus comprising a fluidized bed reactor and a heat exchanger of the present disclosure for carrying out a process for preparing an olefin polymer..

Fluidized-bed reactor (1) comprises a fluidized bed (11) of polyolefin particles, a gas distribution grid (12) and a velocity reduction zone (13) having an increased diameter compared to the diameter of the fluidized bed portion of the reactor. The polyolefin bed is kept in a fluidization state by an upwardly flow of gas fed through the gas distribution grid (12) placed at the bottom of reactor (1). The gaseous stream of the reaction gas leaving the top of the velocity reduction zone (13) via the recycle line (3) is compressed by the compressor (4) comprising variable guide vanes (5), transferred to a heat exchanger (6), in which it is cooled, and then recycled to the bottom of the fluidized-bed reactor (1) at a point below the gas distribution grid (12). The recycle line (3) further comprises, downstream from the heat exchanger (6), a butterfly valve (7). Make-up monomer, molecular weight regulators, and optional inert gases and/or process additives can be fed into the reactor (1) at various positions, for example via line (8) upstream of the compressor (4).

The fluidized-bed reactor (1) is provided with a continuous pneumatic recycle of polyolefin particles by means of a circulation loop (14) connecting the gas distribution grid (12) to the upper region of the fluidized-bed reactor (1). The circulation loop (14) comprises a settling pipe (15) and a pneumatic conveyor pipe (16). The settling pipe (15) is integrated with its upper opening into the gas distribution grid (12) and is preferably arranged substantially vertical. The gas distribution grid (12) is endowed with a cone shape in such a way that its downward inclination towards the settling pipe (15) fosters the entry of the polyolefin particles into the settling pipe (15) due to gravity. The upper opening of the settling pipe (15) is preferably located in a central position with respect to the gas distribution grid (12). The carrier gas fed via line (17) for transporting the polyolefin particles through the pneumatic conveyor pipe (16) is taken from the gas recycle line at a point downstream of the compressor (4) and upstream the heat exchanger (6). The discharge of polyolefin particles from the fluidized-bed reactor (1) occurs from the settling pipe (15) through discharge conduit (9).

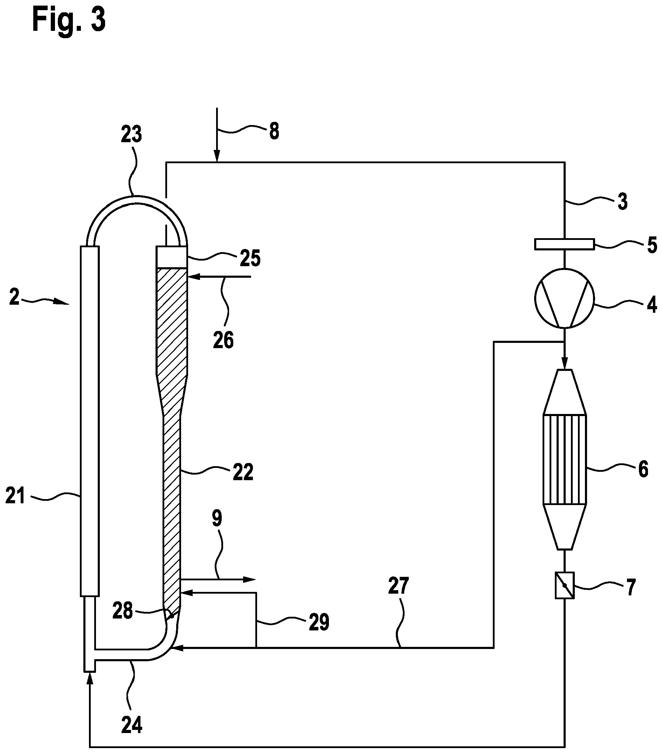

Figure 3 shows schematically an apparatus comprising a multizone circulating reactor and a heat exchanger of the present disclosure for carrying out a process for preparing an olefin polymer

The multizone circulating reactor (2) comprises a riser (21) as first reaction zone and a downcomer (22) as second reaction zone. The riser (21) and the downcomer (22) are repeatedly passed by the polyolefin particles. Within riser (21), the polyolefin particles flow upward under fast fluidization conditions and within the downcomer (22), the polyolefin particles flow downward under the action of gravity. The riser (21) and the downcomer (22) are appropriately interconnected by the interconnection bends (23) and (24).

After flowing through the riser (21), the polyolefin particles and the reaction gas mixture leave riser (21) and are conveyed to a solid/gas separation zone (25). This solid/gas separation can be effected by using conventional separation means such as, for example, a centrifugal separator like a cyclone. From the separation zone (25) the polyolefin particles move downwards into the downcomer (22). A barrier fluid for preventing the reaction gas mixture of the riser (21) from entering the downcomer (22) can be fed into a top part of the downcomer (22) via line (26).

The reaction gas mixture leaving the separation zone (25) is recycled to the bottom of the riser (21) by means of a recycle line (3), equipped with a compressor (4) comprising variable guide vanes (5) to establish fast fluidization conditions the riser (21). The recycle line (3) further comprises a heat exchanger 6) and a butterfly valve (7) downstream of heat exchanger (6). Make-up monomers, make-up comonomers, and optionally inert gases and/or process additives can be can be fed into the reactor (2) at various positions, for example via line (8) into the recycle line (3). Between the compressor (4) and the heat exchanger (6), a line (27) branches off and conveys a part of the recycle gas into the interconnection bend (24) for transporting the polyolefin particle from the downcomer (22) to the rise (21).

The bottom of the downcomer (22) is equipped with a butterfly valve (28) having an adjustable opening for adjusting the flow of polyolefin particles from downcomer (22) through interconnection bend (24) into the riser (21). Above the butterfly valve (28), amounts of a recycle gas mixture coming from the recycle line (3) through lines (26) and (29) are introduced as dosing gas into the downcomer (22) to facilitate the flow of the polyolefin particles through butterfly valve (28). The discharge of polyolefin particles from the multizone circulating reactor (2) occurs from the downcomer (22) through discharge conduit (9).

## Claims

1. Multitubular heat exchanger (6) for cooling a gas stream, the heat exchanger (6) comprising:
- an inlet chamber (61);
- a bundle of tubes (62) encased in a shell structure; and
- an outlet chamber (63),
wherein each tube (62) comprises:
- an inlet (621)
- a longitudinal middle part (622); and
- an outlet (623);
wherein the diameter d1 of the inlet (621) of each tube (62) is larger than the diameter d2 of the corresponding longitudinal middle part (622) of said tube, wherein the inlets (621) of the tubes (62) of the heat exchanger are integrated in a tube sheet (64) separating the inlet chamber (61) from the volume within the shell structure, **characterized in that** an upper surface of the tube sheet (64) between two tubes is three-dimensionally shaped so that the tube sheet (64) forms an apex (641) in the middle between two neighboring tubes.

2. The heat exchanger (6) of claim 1, wherein the ratio of the diameter d1 to the diameter d2 is from 1.75:1 to 1.5:1, more preferably from 1.4:1 to 1.3:1.

3. The heat exchanger of either of claims 1 or 2, wherein the inlet (621) of each tube (62) has a conical shape.

4. The heat exchanger (6) of any of the previous claims, wherein the diameter d1 of the inlet (621) of each tube (62) is 25 to 45 mm, preferably 30 to 40 mm.

5. The heat exchanger (6) of any of the previous claims, wherein the diameter d2 of the longitudinal middle part (622) of the tube (62) is 10 to 30 mm, preferably 15 to 25 mm.

6. The heat exchanger (6) of any of the previous claims, wherein the bundle of tubes comprises at least 500, preferably 500 to 6000 tubes (62).

7. The heat exchanger (6) of any of the previous claims, wherein the distance between the middle parts (622) of neighboring tubes (62) is 25 to 45 mm, preferably 30 to 35 mm, measured from tube axis to tube axis.

8. The heat exchanger (6) of any of the previous claims, wherein the angle between the cone area and the central axis of the tube is preferably in the range from 20° to 60°, more preferably from 30° to 50°, and in particular 45°.

9. The heat exchanger (6) of any of the previous claims, wherein the tube sheet (64) comprises a hole for each tube (62), wherein the tube (62) is partly received in the respective hole, and wherein the hole at least partly tapers out towards the upper surface forming the inlets (621) of the tubes (62) and forming a pointy apex (641) between neighboring tubes (62).

10. The heat exchanger (6) of any of the previous claims, wherein the inner surface of the tubes (62) and/or the surfaces of the an inlet chamber (61) and the outlet chamber (63) have a surface roughness Rₐ of less than 7 µm, preferably less than 3 µm, in particular less than 2 µm, determined according to ASME B46.1.

11. A apparatus for the gas-phase polymerization of olefins, the apparatus comprising
- a reactor (1,2) comprising at least one polymerization zone;
- a recycle line (3) for withdrawing reaction gas from the reactor (1, 2) and feeding the reaction gas back into the reactor (1, 2);
- a compressor (4) for conveying the reaction gas along the recycle line (3); and
- a heat exchanger (6) for cooling the reaction gas,
wherein the heat exchanger (6) is the heat exchanger of any of claims 1 to 10.

12. The apparatus of claim 11, the apparatus further comprises a butterfly valve (7) arranged downstream of the heat exchanger (6).

13. The apparatus of claim 11 or 12, wherein the reactor is a fluidized-bed reactor.

14. The apparatus of claim 11 or 12, wherein the reactor is a multizone circulating reactor (2), wherein in a first polymerization zone (21), growing polyolefin particles flow upwards under fast fluidization or transport conditions and wherein in a second polymerization zone (22), growing polyolefin particles flow downward in a densified form, wherein the first polymerization zone (21) and the second polymerization zone (22) are interconnected and polyolefin particles leaving the first polymerization zone (21) enter the second polymerization zone (22) and polyolefin particles leaving the second polymerization zone (22) enter the first polymerization zone (21), thus establishing a circulation of polyolefin particles through the first and second polymerization zones (21, 22).

15. A process for preparing an olefin polymer comprising homopolymerizing an olefin or copolymerizing an olefin and one or more other olefins at temperatures from 20 to 200°C and pressures of 0.5 to 10 MPa in the presence of a polymerization catalyst, wherein the process is carried out in the apparatus of any of claims 11 to 14.

## Patentansprüche

1. Mehrrohriger Wärmetauscher (6) zum Kühlen eines Gasstroms, wobei der Wärmetauscher (6) umfasst:
- eine Einlasskammer (61);
- ein Bündel von Rohren (62), eingehaust in einer Mantelstruktur; und
- eine Auslasskammer (63);
wobei jedes Rohr (62) umfasst:
- einen Einlass (621);
- ein längsgerichtetes Mittelteil (622); und
- einen Auslass (623);
wobei der Durchmesser d1 des Einlasses (621) von jedem Rohr (62) größer als der Durchmesser d2 des entsprechenden längsgerichteten Mittelteils (622) des Rohrs ist, wobei die Einlässe (621) der Rohre (62) des Wärmetauschers in einen Rohrboden (64) integriert sind, der die Einlasskammer (61) von dem Volumen innerhalb der Mantelstruktur trennt, **dadurch gekennzeichnet, dass** eine obere Oberfläche des Rohrbodens (64) zwischen zwei Rohren dreidimensional geformt ist, so dass der Rohrboden (64) in der Mitte zwischen zwei benachbarten Rohren einen Scheitel (641) bildet.

2. Wärmetauscher (6) nach Anspruch 1, wobei das Verhältnis des Durchmessers d1 zu dem Durchmesser d2 1,75:1 bis 1,5:1, bevorzugter 1,4:1 bis 1,3:1 beträgt.

3. Wärmetauscher nach einem der Ansprüche 1 oder 2, wobei der Einlass (621) von jedem Rohr (62) eine konische Form hat.

4. Wärmetauscher (6) nach einem der vorhergehenden Ansprüche, wobei der Durchmesser d1 des Einlasses (621) von jedem Rohr (62) 25 bis 45 mm, vorzugsweise 30 bis 40 mm beträgt.

5. Wärmetauscher (6) nach einem der vorhergehenden Ansprüche, wobei der Durchmesser d2 des längsgerichteten Mittelteils (622) des Rohrs (62) 10 bis 30 mm, vorzugsweise 15 bis 25 mm beträgt.

6. Wärmetauscher (6) nach einem der vorhergehenden Ansprüche, wobei das Bündel von Rohren mindestens 500, vorzugsweise 500 bis 6000 Rohre (62) umfasst.

7. Wärmetauscher (6) nach einem der vorhergehenden Ansprüche, wobei der Abstand zwischen den Mittelteilen (622) benachbarter Rohre (62) 25 bis 45 mm, vorzugsweise 30 bis 35 mm beträgt, gemessen von Rohrachse zu Rohrachse.

8. Wärmetauscher (6) nach einem der vorhergehenden Ansprüche, wobei der Winkel zwischen dem Konusbereich und der Zentralachse des Rohrs vorzugsweise im Bereich von 20° bis 60°, bevorzugter 30° bis 50° liegt und insbesondere 45° beträgt.

9. Wärmetauscher (6) nach einem der vorhergehenden Ansprüche, wobei der Rohrboden (64) ein Loch für jedes Rohr (62) umfasst, wobei das Rohr (62) teilweise in dem jeweilige Loch aufgenommen wird, und wobei das Loch mindestens teilweise in Richtung der oberen Oberfläche zuläuft, die die Einlässe (621) der Rohre (62) bildet, und einen spitz zulaufenden Scheitel (641) zwischen benachbarten Rohren (62) bildet.

10. Wärmetauscher (6) nach einem der vorhergehenden Ansprüche, wobei die innere Oberfläche der Rohre (62) und/oder die Oberflächen der Einlasskammer (61) und der Auslasskammer (63) eine Oberflächenrauheit Rₐ von weniger als 7 µm, vorzugsweise weniger als 3 µm, insbesondere weniger als 2 µm hat/haben, bestimmt gemäß ASTM B46.1.

11. Vorrichtung zur Gasphasenpolymerisation von Olefinen, wobei die Vorrichtung umfasst:
- einen Reaktor (1, 2), umfassend mindestens eine Polymerisationszone;
- eine Recyclingleitung (3) zum Abziehen von Reaktionsgas aus dem Reaktor (1, 2) und Rückspeisen des Reaktionsgases in den Reaktor (1, 2);
- einen Kompressor (4) zum Fördern des Reaktionsgases entlang der Recyclingleitung (3); und
- einen Wärmetauscher (6) zum Kühlen des Reaktionsgases,
wobei der Wärmetauscher (6) der Wärmetauscher gemäß einem der Ansprüche 1 bis 10 ist.

12. Vorrichtung nach Anspruch 11, wobei die Vorrichtung des Weiteren ein Drosselventil (7) umfasst, das nachgeordnet zu dem Wärmetauscher (6) angeordnet ist.

13. Vorrichtung nach Anspruch 11 oder 12, wobei der Reaktor ein Wirbelbettreaktor ist.

14. Vorrichtung nach Anspruch 11 oder 12, wobei der Reaktor ein mehrzoniger Umlaufreaktor (2) ist, wobei in einer ersten Polymerisationszone (21) wachsende Polyolefinpartikel unter raschen Verwirbelungs- oder Transportbedingungen aufwärts fließen, und wobei in einer zweiten Polymerisationszone (22) wachsende Polyolefinpartikel in einer verdichteten Form abwärts fließen, wobei die erste Polymerisationszone (21) und die zweite Polymerisationszone (22) miteinander verbunden sind, und Polyolefinpartikel, die die erste Polymerisationszone (21) verlassen, in die zweite Polymerisationszone (22) eintreten, und Polyolefinpartikel, die die zweite Polymerisationszone (22) verlassen, in die erste Polymerisationszone (21) eintreten, wodurch eine Zirkulation von Polyolefinpartikeln durch die erste und die zweite Polymerisationszone (21, 22) errichtet wird.

15. Verfahren zur Herstellung eines Olefinpolymers, umfassend Homopolymerisieren eines Olefins oder Copolymeriseren eines Olefins und eines oder mehrerer anderer Olefine bei Temperaturen von 20 bis 200 °C und Drücken von 0,5 bis 10 MPa in Gegenwart eines Polymerisationskatalysators, wobei das Verfahren in der Vorrichtung nach einem der Ansprüche 11 bis 14 durchgeführt wird.

## Revendications

1. Échangeur de chaleur (6) multitubulaire destiné à refroidir un flux de gaz, l'échangeur de chaleur (6) comprenant :
- une chambre d'entrée (61) ;
- un faisceau de tubes (62) enfermés dans une structure d'enveloppe ; et
- une chambre de sortie (63),
chaque tube (62) comprenant :
- une entrée (621)
- une partie médiane (622) longitudinale ; et
- une sortie (623) ;
le diamètre d1 de l'entrée (621) de chaque tube (62) étant supérieur au diamètre d2 de la partie médiane (622) longitudinale correspondante dudit tube, les entrées (621) des tubes (62) de l'échangeur de chaleur étant intégrées dans une feuille tubulaire (64) séparant la chambre d'entrée (61) par rapport au volume à l'intérieur de la structure d'enveloppe, **caractérisé en ce qu'**une surface supérieure de la feuille tubulaire (64) entre deux tubes est façonnée en trois dimensions de telle sorte que la feuille tubulaire (64) forme un sommet (641) au milieu entre deux tubes voisins.

2. Échangeur de chaleur (6) selon la revendication 1, le rapport du diamètre d1 au diamètre d2 étant de 1,75:1 à 1,5:1, plus préférablement de 1,4:1 à 1,3:1.

3. Échangeur de chaleur selon l'une ou l'autre des revendications 1 ou 2, l'entrée (621) de chaque tube (62) présentant une forme conique.

4. Échangeur de chaleur (6) selon l'une quelconque des revendications précédentes, le diamètre d1 de l'entrée (621) de chaque tube (62) étant de 25 à 45 mm, de préférence de 30 à 40 mm.

5. Échangeur de chaleur (6) selon l'une quelconque des revendications précédentes, le diamètre d2 de la partie médiane (622) longitudinale du tube (62) étant de 10 à 30 mm, de préférence de 15 à 25 mm.

6. Échangeur de chaleur (6) selon l'une quelconque des revendications précédentes, le faisceau de tubes comprenant au moins 500, de préférence 500 à 6000 tubes (62).

7. Échangeur de chaleur (6) selon l'une quelconque des revendications précédentes, la distance entre les parties médianes (622) de tubes voisins (62) étant de 25 à 45 mm, de préférence de 30 à 35 mm, mesurée d'axe tubulaire à axe tubulaire.

8. Échangeur de chaleur (6) selon l'une quelconque des revendications précédentes, l'angle entre la zone conique et l'axe central du tube étant de préférence situé dans la plage de 20 ° à 60 °, plus préférablement de 30 ° à 50 ° et en particulier de 45 °.

9. Échangeur de chaleur (6) selon l'une quelconque des revendications précédentes, la feuille tubulaire (64) comprenant un trou pour chaque tube (62), le tube (62) étant partiellement logé dans le trou respectif et le trou s'effilant au moins partiellement vers la surface supérieure pour former les entrées (621) des tubes (62) et former un sommet pointu (641) entre des tubes voisins (62).

10. Échangeur de chaleur (6) selon l'une quelconque des revendications précédentes, la surface interne des tubes (62) et/ou les surfaces de la chambre d'entrée (61) et de la chambre de sortie (63) présentant une rugosité de surface Ra inférieure à 7 µm, de préférence inférieure à 3 µm, en particulier inférieure à 2 µm, déterminée selon la norme ASME B46.1.

11. Appareil de polymérisation en phase gazeuse d'oléfines, l'appareil comprenant
- un réacteur (1,2) comprenant au moins une zone de polymérisation ;
- une ligne de recyclage (3) destinée à soutirer le gaz de réaction du réacteur (1, 2) et à renvoyer le gaz de réaction dans le réacteur (1, 2) ;
- un compresseur (4) destiné à transporter le gaz de réaction le long de la ligne de recyclage (3) ; et
- un échangeur de chaleur (6) destiné à refroidir le gaz de réaction,
l'échangeur de chaleur (6) étant l'échangeur de chaleur selon l'une quelconque des revendications 1 à 10.

12. Appareil selon la revendication 11, l'appareil comprenant en outre une vanne papillon (7) agencée en aval de l'échangeur de chaleur (6).

13. Appareil selon la revendication 11 ou 12, le réacteur étant un réacteur à lit fluidisé.

14. Appareil selon la revendication 11 ou 12, le réacteur étant un réacteur à circulation (2) multizone, dans lequel, dans une première zone de polymérisation (21), des particules polyoléfiniques en croissance s'écoulent vers le haut dans des conditions de fluidisation ou de transport rapides et, dans lequel, dans une seconde zone de polymérisation (22), des particules polyoléfiniques en croissance s'écoulent vers le bas sous une forme densifiée, la première zone de polymérisation (21) et la seconde zone de polymérisation (22) étant interconnectées et des particules polyoléfiniques quittant la première zone de polymérisation (21) entrant dans la seconde zone de polymérisation (22) et des particules polyoléfiniques quittant la seconde zone de polymérisation (22) entrant dans la première zone de polymérisation (21), établissant ainsi une circulation de particules polyoléfiniques à travers les première et seconde zones de polymérisation (21, 22).

15. Procédé de préparation d'un polymère oléfinique comprenant l'homopolymérisation d'une oléfine ou la copolymérisation d'une oléfine et d'une ou de plusieurs autres oléfines à des températures de 20 à 200 °C et à des pressions de 0,5 à 10 MPa en présence d'un catalyseur de polymérisation, le procédé étant mis en oeuvre dans l'appareil selon l'une quelconque des revendications 11 à 14.
